# EUROPÄISCHE PATENTANMELDUNG

(11) **EP 0 623 702 A2**
(43) Veröffentlichungstag der Anmeldung: **09.11.1994**
(21) Anmeldenummer: 94104375.4
(22) Anmeldetag: 19.03.1994
(51) Int. Cl.: D21F 5/02, G01M 1/36, G01M 1/32

(54) **Verfahren und Vorrichtung zum verschiebesicheren Positionieren eines Bauteils**

(30) Priorität: 10.04.1993 DE 4311936
(71) Anmelder: J.M. VOITH AG, A-3100 St. Pölten (AT)
(72) Erfinder: Schachenhofer, Rudolf, A-3100 St. Pölten (AT)
(74) Vertreter: Weitzel, Wolfgang, Dr.-Ing. Patentanwalt

(57) **Zusammenfassung**

An die Innenseite eines Walzenmantels (1) sind durch die Kraft von Federn (19) mehrere Auswuchtgewichte (17) angedrückt. In jedem Auswuchtgewicht (17) befinden sich Positionierstifte (3) mit je einer Spitze (4), die in das Material des Zylindermantels (1) hineinragt, zwecks verschiebesicherer Positionierung des Auswuchtgewichtes (17). Die Positionierstifte (3) bestehen aus härterem Material als der Walzenmantel (1) und sind durch Krafteinwirkung in den Walzenmantel eingetrieben.

## Beschreibung

Die Erfindung betrifft ein Verfahren und eine Vorrichtung zum verschiebesicheren Positionieren eines Bauteils, z.B. eines Auswuchtgewichtes oder einer Kondensatstörleiste oder dergleichen, das an die Innenfläche eines Walzen- oder Zylindermantels angedrückt ist. Die Erfindung ist anwendbar beispielsweise in Walzen oder Trockenzylindern von Papierherstellungs- oder Papierverarbeitungsmaschinen. Das betreffende und zu positionierende Bauteil wird unter der Wirkung einer Haltekraft an der Mantelinnenfläche gehalten. Die Kaltekraft kann sein eine Magnetkraft oder die Kraft einer Feder oder einer Schraube.

Zum Stand der Technik wird auf die folgenden Druckschriften verwiesen:
- D1:: DE 26 59 130 = US 4 235 124,
- D2:: DE 28 49 454 = US 4 282 656,
- D3:: DE 29 03 784 = US 4 267 644
- D4:: US 4 369 586

Gemäß D1 ist ein Auswuchtgewicht zwischen der Innenfläche eines Walzenmantels und einer U-förmigen Schiene gehalten und mittels Federkraft an die Mantelinnenfläche angedrückt (im Betrieb zusätzlich durch die Fliehkraft). Es handelt sich hier um eine nur kraftschlüssige Befestigung eines Bauteils an der Mantelinnenfläche; eine verschiebesichere Positionierung des Bauteils, nämlich des Auswuchtgewichtes, ist nicht vorgesehen.

In D2 und D3 sind Trockenzylinder beschrieben, an deren Mantelinnenfläche ebenfalls Bauteile befestigt sind. Es handelt sich hier um Kondensatstörleisten, die sich im wesentlichen parallel zur Drehachse des Zylinders erstrecken. Sie werden beispielsweise durch Federkraft an die Mantelinnenfläche gedrückt und zusätzlich mittels eines Positionierelements verschiebesicher positioniert. Als Positionierelement ist an dem Bauteil ein Zylinderstift befestigt, der in eine Bohrung des Zylindermantels hineinragt. Diese bekannte Bauweise ist insofern ungünstig, als jede in einen Zylindermantel eingearbeitete Bohrung die Festigkeit des Zylindermantels schwächt. Außerdem besteht die Gefahr, daß beim Herstellen der Bohrungen, insbesondere bei einem nachträglichen Einbau von Kondensatstörleisten in einen ansonsten betriebsbereiten Trockenzylinder, die Bohrspäne nur mit großem Aufwand vollkommen entfernt werden können. In anderen Fällen ist das Herstellen von Bohrungen im Inneren eines Zylinders oder einer Walze überhaupt nicht möglich, weil nicht genügend Platz zur Verfügung steht. Gemäß D4 ist der Kopf eines (zum Kondensat-Entfernen dienenden) Siphons mit Hilfe von Schrauben an der Innenseite eines Zylindermantels befestigt. Eine zusätzliche verschiebesichere Positionierung des Bauteils ist nicht vorgesehen. Es besteht also die Gefahr, daß infolge unterschiedlicher Wärmedehnung mit der Zeit eine Lockerung der Schraubverbindung stattfindet.

Man hat außerdem versucht, gewisse Bauteile, z.B. Auswuchtgewichte mittels einer Klebeverbindung an der Innenseite eines Walzenmantels zu befestigen. Jedoch ist die Zuverlässigkeit dieser Methode in vielen Fällen nicht ausreichend, insbesondere, wenn es sich um einen beheizten Trockenzylinder handelt; denn auch der beste Klebstoff hat nicht die hierfür erforderliche Wärmebeständigkeit.

Der Erfindung liegt die Aufgabe zugrunde, das im Oberbegriff des Anspruches 1 angegebene Verfahren dahingehend weiterzuentwickeln, daß an der Innenseite des Walzen- oder Zylindermantels zur verschiebesicheren Positionierung das Einarbeiten von Bohrungen vermieden werden kann, so daß entweder überhaupt keine Bohrungen oder nur wenige Gewindebohrungen für eine Schraubverbindung erforderlich sind. Außerdem soll eine hierfür geeignete Vorrichtung angegeben werden.

Zur Lösung dieser Aufgabe sind gemäß der Erfindung die im Anspruch 1 angegebenen Verfahrensschritte bzw. die im Anspruch 5 angegebenen Vorrichtungsmerkmale vorgesehen.

Dank der Erfindung ist der Montageaufwand für ein verschiebesicheres Positionieren eines Bauteils an der Innenfläche eines Walzen- oder Zylindermantels gegenüber bisher wesentlich reduziert. In vielen Anwendungsfällen der Erfindung kann nämlich auf das Einarbeiten von Bohrungen in den Walzen- oder Zylindermantel vollkommen verzichtet werden. Es wurde nämlich erkannt, daß es zum sicheren Positionieren des Bauteils völlig ausreicht, wenn dieses beispielsweise zwei spitze Vorsprünge aufweist, die man in das Material des Mantels eintreibt. Im Zusammenwirken mit der Kraft, welche das Bauteil an den Mantel andrückt, verkrallt sich dieses unverrückbar mit dem Mantel.

Weitere Einzelheiten und Ausgestaltungen der Erfindung, die Gegenstand der Unteransprüche sind, werden nachfolgend anhand der zeichnerisch dargestellten Ausführungsbeispiele erläutert:
Figur 1 ist ein Teilschnitt durch eine Walze mit einem innen fixierten Bauteil.
Figuren 2 und 3 sind Alternativen zu Fig. 1.
Figur 4 zeigt einen mit einer Zylinderinnenwand verschraubten Siphonschuh.
Figur 5 ist ein Schnitt entlang der Linie V-V der Fig. 4.
Figur 6 ist ein Teilquerschnitt durch einen innen berippten Trockenzylinder.
Figur 7 ist ein Teillängsschnitt entlang der Schnittlinie VII-VII der Fig. 6.
Figur 8 ist ein Querschnitt durch eine Leitwalze.
Figur 9 zeigt im Schnitt ein an die Innenfläche eines Walzenmantels angedrücktes (z.B. angeschraubtes) Bauteil.
Fig. 10 ist ein Teillängsschnitt durch einen Trockenzylinder.

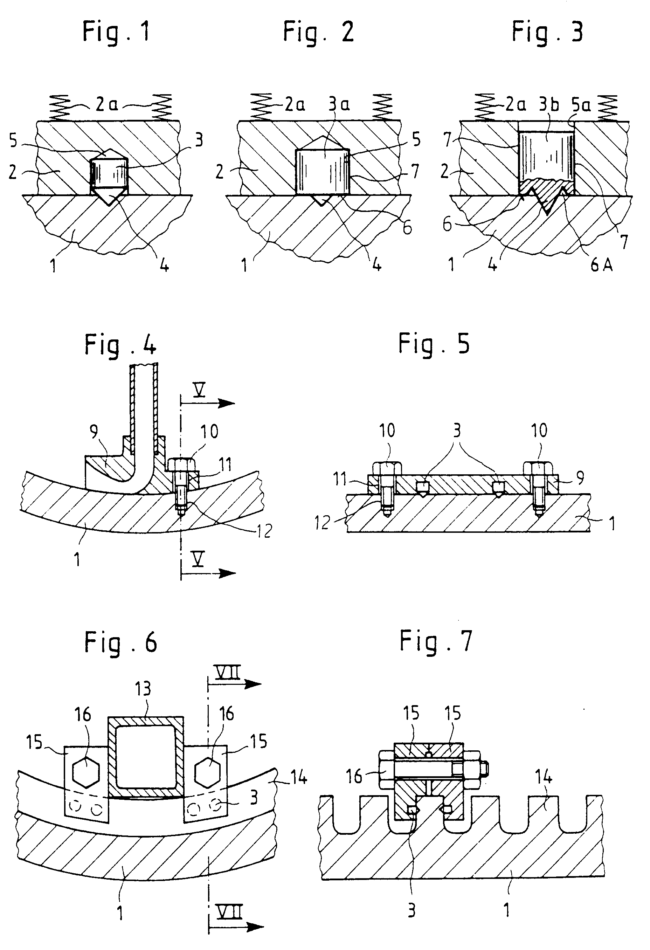

In Fig. 1 ist an der Innenseite eines Walzen- oder Zylindermantels 1 ein Bauteil 2 angepreßt, z.B. durch die Kraft von Federn 2a. Ein Positionierstift 3 mit Spitze 4 sitzt in einer Bohrung 5 des Bauteils 2. In Fig. 2 sind, wie auch in den weiteren Figuren, gleiche Teile mit gleichen Nummern bezeichnet. Der Positionierstift 3a hat außer der Spitze 4 noch eine achssenkrechte Ringfläche 6 zwischen Schaft 7 und Spitze 4.

In Figur 3 ist die Bohrung 5a eine Durchgangsbohrung. Der Positionierstift 3b ist in dieser Bohrung durch Preßsitz gehalten. Der Positionierstift hat in diesem Beispiel in der Ringfläche 6 zwischen Schaft 7 und Spitze 4 eine ringförmige Hinterdrehung 6A, die das beim Eintreiben der Spitze 4 in die Innenwand 2 herausgedrückte Material aufnimmt. Der Positionierstift 3 wird mit einer Presse oder mit Hammer und Durchschlag vom offenen Ende der Bohrung 5a her eingepreßt oder eingeschlagen und in das Material des Zylindermantels 1 eingetrieben.

In Figur 4 ist an einen Zylindermantel 1 ein Siphonschuh 9 mittels Schrauben 10 befestigt, die durch Durchgangslöcher 11 des Siphonschuhs 9 hindurchgehen und in Gewindebohrung 12 eingeschraubt sind. Weil zwischen Schrauben 10 und Durchgangsbohrungen 11 ein Spiel besteht, könnte sich der Siphonschuh 9 unter der Einwirkung von Querkräften um das Maß dieses Spieles verschieben. In einem solchen Fall würden sich die Schrauben lockern.

Wie in Figur 5 gezeigt ist, wird eine solche Verschiebung durch Positionierstifte 3 verhindert. Der auf diese Weise positionierte Siphonschuh 9 ist dadurch in seiner Position festgelegt und auch gegen Verdrehung gesichert.

In Fig. 6 und 7 wird ein vierkantiges Kondensat-Sammelrohr 13 längsverschieblich auf Umfangsrippen 14 eines Zylindermantels 1 abgestützt. Zur Verhinderung einer Wanderung des Rohrs 13 in Umfangsrichtung sind zweiteilige Führungsstücke 15 mittels Verbindungsschrauben 16 an den inneren Umfangsrippen 14 der Zylinderwand 1 festgeklemmt. Mindestens in einer der beiden Hälften des Führungsstückes 15 sind Positionierstifte 3 eingelassen. Beim Festziehen der Verbindungsschraube 16 graben sich die Spitzen 4 (Fig. 1) der Positionierstifte 3 in die Flanken der Umfangsrippen 14 ein. Es ist auch möglich, die Senkungen für die Spitzen 4 in richtiger Position vor dem Setzen der Führungsstücke 15 mit einem Sonderwerkzeug vorzuformen.

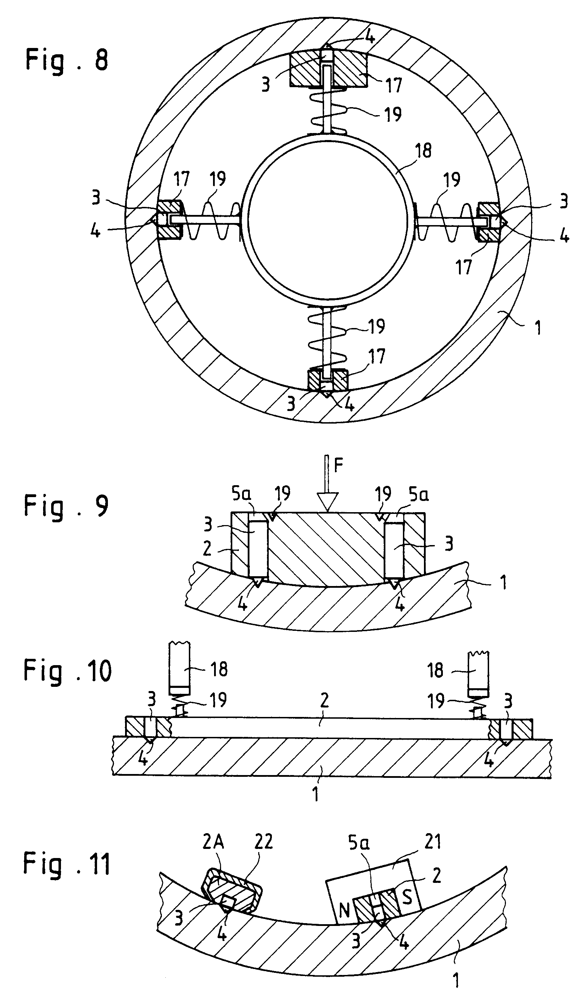

Die Figur 8 zeigt Auswuchtgewichte 17, die von einem gemeinsamen Haltegestell 18 über Federn 19 an die Innenseite eines Walzenmantels 1 gedrückt werden. Um unerwünschte Verschiebung, z.B. beim Auftreten von Vibrationen sicher zu verhindern, sind wiederum Postionierstifte 3 mit Spitzen 4 im Einsatz. Die Spitzen 4 sind in den Walzenmantel 1 getrieben.

Fig. 9 zeigt ein weiteres Beispiel: Ein Bauteil 2 (z.B. Auswuchtgewicht) wird durch eine Anpreßkraft F gegen einen Zylindermantel 1 gedrückt. Zwei Positionierstifte 3 mit Kegelspitzen 4 sind in Durchgangsbohrungen 5a positioniert. Die Kegelspitzen 4 sind in die Zylinderwand 1 eingetrieben. Körner- oder Meißelhiebe 19 in Teil 2 verhindern ein Lösen, d.h. eine axiale Verschiebung der Positionierstifte 3 in den Bohrungen 5a.

In Fig. 10 wird eine zur Achse eines Zylinders parallele Leiste 2 (z.B. Kondensatstörleiste) durch Federn 19 an die Zylinderwand 1 gedrückt. Positionierstifte 3 mit Spitzen 4 verhindern eine Verschiebung oder Verdrehung der Leiste 2 relativ zur Zylinderwand 1. Anstelle der Federn 19 können auch Magnete zum Kalten der Leiste 2 an der Zylinderwand 1 eingesetzt werden, oder die Leiste selbst kann aus Magneten, gegebenenfalls kombiniert mit anderen Materialen, zusammengesetzt sein.

Figur 11 zeigt im Teil-Querschnitt durch einen Zylindermantel 1 eine achsparallele Leiste 2, die durch einen sie umgreifenden Hufeisenmagneten 21 an der Zylinderwand 1 gehalten wird. Die Pole des Hufeisenmagneten 21 sind mit N bzw. S bezeichnet. Die Leiste 2 ist durch Positionierstifte 3 mit Spitze 4 gegen Verschiebung gegenüber dem Mantel 1 gesichert. Die Spitze 4 kann kegelig oder keilförmig sein.

Anstelle eines Positionierstiftes kann auch eine in das Bauteil 2 eingeschraubte Positionierschraube vorgesehen werden. In Verbindung mit einer keilförmigen Spitze ist ein Herausdrehen aus dem Gewinde nicht möglich, d.h. die Keilspitze ist auch Verdrehsicherung der Positionierschraube. Ebenfalls in Fig. 11 ist eine andere Bauart magnetisch gehaltener Leisten 2A mit Positionierstiften 3 dargestellt. Mehrere hintereinander gereihte Leisten, die als Stabmagnete 2A ausgebildet sind, werden durch eine sie umhüllende Schiene 22 zusammengehalten. In einzelnen Magneten sind Positionierstifte 3 mit Spitzen 4 eingelassen.

Für alle Ausführungsbeispiele gilt, daß die Positionierstifte 3 (oder zumindest deren Spitzen 4) aus relativ hartem Werkstoff bestehen oder gehärtet sind, so daß man sie leicht in das relativ weiche Material des Walzen- oder Zylindermantels 1 eintreiben kann. Denkbar ist auch, daß man an dem betreffenden Bauteil 2 oder 2A Vorsprünge mit je einer Spitze 4 anformt und die Spitzen 4 härtet.

## Patentansprüche

1. Verfahren zum verschiebesicheren Positionieren eines an die Innenfläche eines Walzen- oder Zylindermantels angedrückten Bauteils, z.B. eines Auswuchtgewichtes, einer Kondensatstörleiste oder dergleichen, mittels eines Positionierelementes, das - ausgehend von dem genannten Bauteil - in den Mantel hineinragt, dadurch gekennzeichnet, daß man als Positionierelemente an der dem Mantel (1) zugekehrten Seite des Bauteils (2; 2A) spitze Vorsprünge (4) vorsieht und diese in den Mantel eintreibt.

2. Verfahren nach Anspruch 1, dadurch gekennzeichnet, daß man in das Bauteil (2; 2A) spitze (d.h. zugespitzte) Positionierstifte (3; 3a, 3b) einsetzt, deren spitze Enden (4) in den Mantel (1) eingetrieben werden.

3. Verfahren nach Anspruch 1 oder 2, dadurch gekennzeichnet, daß man die spitzen Vorsprünge (4) gleichzeitig mit dem Andrücken des Bauteils an die Innenfläche des Mantels (1) in den Mantel eintreibt.

4. Verfahren nach Anspruch 2, dadurch gekennzeichnet, daß die Positionierstifte (3b) in durchgehende Bohrungen (5a) des Bauteils (2) eingesetzt und nach dem Andrücken des Bauteils an die Innenfläche des Mantels (1) in den Mantel eingetrieben und danach in der durchgehenden Bohrung axial fixiert werden.

5. Vorrichtung zum verschiebesicheren Positionieren eines an die Innenfläche eines Walzen- oder Zylindermantels angedrückten Bauteils, z.B. eines Auswuchtgewichtes, einer Kondensatstörleiste oder dergleichen, mit Hilfe von Positionierelementen, die - ausgehend von dem genannten Bauteil - in den Mantel hineinragen, dadurch gekennzeichnet, daß die Positionierelemente als spitze (d.h. zugespitzte) Vorsprünge (4) ausgebildet und an der dem Mantel zugewandten Seite des Bauteils (2; 2A) angeordnet sind,
und daß jeder der spitzen Vorsprünge (4) in eine Ausnehmung des Mantels (1) hineinragt, die durch Eintreiben des spitzen Vorsprunges spanlos geformt ist.

6. Vorrichtung nach Anspruch 5, dadurch gekennzeichnet, daß in das Bauteil (2; 2A) Positionierstifte (3; 3a; 3b) eingesetzt sind, von denen jeder einen der spitzen Vorsprünge (4) bildet.

7. Vorrichtung nach Anspruch 5 oder 6, dadurch gekennzeichnet, daß die spitzen Vorsprünge (4) eine höhere Härte aufweisen als das Material des Walzen- bzw. Zylindermantels (1).

8. Vorrichtung nach einem der Ansprüche 5-7, dadurch gekennzeichnet, daß die Eindringtiefe der spitzen Vorsprünge (4) in den Mantel (1) 0,25 - 2,5 mm beträgt.

9. Vorrichtung nach einem der Ansprüche 6-8, dadurch gekennzeichnet, daß jeder der Positionierstifte (3; 3a; 3b) mit einem Preßsitz in einer Bohrung (5a) des zu positionierenden Bauteils sitzt.

10. Vorrichtung nach einem der Ansprüche 6-9, dadurch gekennzeichnet, daß die genannten Bohrungen (5) Sackbohrungen sind.

11. Vorrichtung nach einem der Ansprüche 6-9, dadurch gekennzeichnet, daß die Bohrungen (5a) Durchgangsbohrungen sind.

12. Vorrichtung nach Anspruch 11, dadurch gekennzeichnet, daß der einzelne Positionierstift (3; 3b) kürzer ist als seine Durchgangsbohrung (5a), und daß er darin axial fixiert ist, vorzugsweise durch Verformung des freien Endes der Bohrung.

13. Vorrichtung nach Anspruch 10, dadurch gekennzeichnet, daß der einzelne Positionierstift (3; 3a) am Grund der Sackbohrung (5) anliegt.

14. Vorrichtung nach einem der Ansprüche 6-13, dadurch gekennzeichnet, daß der einzelne Positionierstift (3a) eine die Spitze (4) umgebende radiale Ringfläche (6) aufweist.

15. Vorrichtung nach einem der Ansprüche 5-14, dadurch gekennzeichnet, daß der spitze Vorsprung (4) kegelig ist.

16. Vorrichtung nach einem der Ansprüche 5-14, dadurch gekennzeichnet, daß der spitze Vorsprung keil- oder pyramidenförmig ist.
